# EUROPÄISCHE PATENTANMELDUNG

(11) **EP 1 654 934 A1**
(43) Veröffentlichungstag der Anmeldung: **10.05.2006**
(21) Anmeldenummer: 04026443.4
(22) Anmeldetag: 08.11.2004
(51) Int. Cl.: A23C 9/142, A23C 19/05

(54) **Verfahren zur Herstellung eines denaturierten Molkeretentats, Milchprodukte beinhaltend ein solches Molkeretentat sowie Vorrichtung zur Herstellung eines solchen Molkeretentats**

(71) Anmelder: Neuenschwander, Ernst, 8555 Müllheim Dorf (CH); Neuenschwander, Thomas, 8280 Kreuzlingen (CH); Hirschi, Alfred, 9032 Engelburg (CH); Friedli, Ernst, 8370 Sirnach (CH)
(72) Erfinder: Neuenschwander, Ernst, 8555 Müllheim Dorf (CH); Neuenschwander, Thomas, 8280 Kreuzlingen (CH); Hirschi, Alfred, 9032 Engelburg (CH); Friedli, Ernst, 8370 Sirnach (CH)
(74) Vertreter: Wenger, René

(57) **Zusammenfassung**

Die Erfindung betrifft ein Verfahren und eine Vorrichtung zur Herstellung eines denaturierten Molkeretentats (1), umfassend die folgenden Schritte: Entrahmung der Molke (2); Reduzierung des Gehalts an Bakterien und Sporen in der entrahmten Molke (3); Gewinnung eines Retentats (5) durch Aufkonzentrierung der entrahmten, einen reduzierten Gehalt an Bakterien und Sporen aufweisenden Molke (4); Denaturierung des Retentats (5); Homogenisierung des denaturierten Retentats (6). Ein solchermassen hergestelltes Molkeretentat kann Milchprodukten, insbesondere Halbhart- und Hartkäsen, ohne nachteilige Beeinflussung der sensorischen Eigenschaften und der Konsistenz beigefügt werden.

## Beschreibung

Die Erfindung betrifft die Herstellung eines denaturierten Molkeretentats, Milchprodukte beinhaltend ein solches Molkeretentat sowie eine Vorrichtung zur Herstellung eines solchen Molkeretentats insbesondere gemäss der Oberbegriffe der unabhängigen Patentansprüche.

Bei der Milchverarbeitung fallen beträchtliche Mengen an Nebenprodukten an, wie z.B. Molke bei der Käseherstellung. Unter Molke wird hier und im folgenden die insbesondere trübe Flüssigkeit verstanden, die nach der vollständigen oder teilweisen Abscheidung des Caseins und/oder des Fettes der Milch zurückbleibt. Derzeit gelangen 80 bis 90% der schweizerischen Molkemenge in die Tierfütterung. Sowohl aus wirtschaftlichen als auch ernährungsphysiologischen Überlegungen wird es derzeit als wünschenswert erachtet, die in der Molke enthaltenen Molkeproteine den Milchprodukten, insbesondere dem Käse wieder zuzuführen. Dies ist jedoch mit einer Vielzahl von Problemen behaftet und daher derzeit nur in unbefriedigendem Masse möglich.

Das Erhitzen von Molkeproteinen in Käsewasser oder Kaseinmolke führt im allgemeinen zu unlöslichen, denaturierten Komplexen mit schlechten funktionellen Eigenschaften wie z.B. Schäumen, Emulgieren oder Gelieren, wobei diese Eigenschaften mit der Löslichkeit des Proteins zusammenhängen. Zudem wird oftmals die Bildung von schlecht- und bitter schmeckenden Produkten bei der Weiterverarbeitung von Molkeproteinen berichtet. Insbesondere der Zusatz von Molkeproteinen zu Halbhart- oder Hartkäsen wird vor allem aufgrund der vorstehend genannten Aspekte bisher noch nicht beherrscht.

Es ist daher eine Aufgabe der Erfindung, die Nachteile des Bekannten zu vermeiden, insbesondere also eine Molkenproteinpräparation bereitzustellen, welche in der Produktion von Milchprodukten, insbesondere von Halbhart- und Hartkäsen, verwendet werden kann, ohne dass nachteilige funktionelle Eigenschaften wie wie z.B. Schäumen, Emulgieren oder Gelieren, oder nachteilige strukturelle Eigenschaften wie mangelnde Festigkeit eines Käses o.dgl., oder nachteilige geschmackliche Effekte auftreten.

Diese Aufgabe wird gemäss der Erfindung gelöst mit einem denaturierten Molkeretentat, Milchprodukten beinhaltend ein solches Molkeretentat sowie einer Vorrichtung zur Herstellung eines solchen Molkeretentats insbesondere gemäss der kennzeichnenden Teile der unabhängigen Patentansprüche.

Das Verfahren gemäss der Erfindung zur Herstellung eines denaturierten Molkeretentats umfasst die folgenden Schritte:
- Entrahmung der Molke;
- Reduzierung des Gehalts an Mikroorganismen, Bakterien und Sporen in der entrahmten Molke;
- Gewinnung eines Retentats durch Aufkonzentrierung der entrahmten, einen reduzierten Gehalt an Bakterien und Sporen aufweisenden Molke;
- Denaturierung des Retentats;
- Homogenisierung des denaturierten Retentats.

Mit einem derart hergestellten Molkeretentat wird eine Molkeproteinpräparation bereitgestellt, welche die nachteiligen funktionellen, strukturellen und geschmacklichen Eigenschaften der aus dem Stand der Technik bekannten Molkeproteinpräparationen überwindet. Besonders überraschend wurde gefunden, dass das erfindungsgemäss hergestellte Molkeretentat auch Halbhart- und Hartkäsen, insbesondere auch Emmentaler-Käse beigefügt werden kann, ohne dass die vorbeschriebenen Nachteile auftreten. Typischerweise kann das erfindungsgemässe Molkeretentat (gerechnet mit dem reinen Eiweissgehalt) in einem Anteil von bspw. bis zu 0,2 Gew.%, bis zu 0,3 Gew.% bzw. bis hin zu 0,6 Gew.% oder höheren Anteilen beigegeben werden. Insbesondere bei höheren Anteilen muss ggf. vom Fachmann in Routineversuchen die geschmackliche Neutralität in Routineversuchen überprüft werden. Insbesondere im Vergleich zu in Pulverform bereitgestellten Molkeproteinpräparationen weisen die denaturierten Molkeproteinretentate gemäss der Erfindung verbesserte geschmackliche Eigenschaften (insbesondere kein bitterer Geschmack oder mehlige Konsistenz) und auch verbesserte Struktureigenschaften auf, wenn sie Milchprodukten während des Herstellungsprozessen z.B. von Halbhart- und Hartkäsen beigegeben werden. So wird insbesondere kein nachteiliger Einfluss auf die Struktur des Produkts, dem das Molkeproteinretentat beigefügt wird beobachtet, bspw. beurteilbar durch Schneideigenschaften, Konsistenz, etc. Selbstverständlich ist die Beigabe des erfindungsgemässen Molkeretentats auch vorteilhaft zu weiteren Lebensmitteln möglich, wie bspw. in der Schokoladenherstellung, in der Backwarenherstellung, etc.; die jeweils im spezifischen Anwendungsfall vorteilhaften Beigabemengen können vom Fachmann leicht in Routineversuchen ermittelt werden.

Bei der Entrahmung werden bereits ebenfalls Schwebstoffe mit abgetrennt, durch welche ggf. die vorbekannten Nachteile von Molkeproteinpräparationen verursacht sein könnten. Die Entrahmung der Molke kann mittels dem Fachmann an sich bekannten Verfahren und unter an sich bekannten Bedingungen durchgeführt werden; hierbei wird der sog. Molkenrahm oder Sirtenrahm abgetrennt.

Durch die Reduzierung des Gehalts an Mikroorganismen, Bakterien und Sporen in der entrahmten Molke können nachteilige Einflüsse im weiteren Verarbeitungsprozess insbesondere durch Variation des pH Wertes vermieden werden. Insbesondere Milchsäure- und Buttersäurebakterien könnten vor allem in grösseren Mengen ansonsten eine Absenkung des pH Wertes bewirken, ggf. auch unter den kritischen pH Wert von 4 - 5, bei welchem die Molkeproteine in der Regel ausfallen. Aber auch unerwünschte biologische Prozesse wie Gärung, Faulung etc. können so unterbunden werden. Die Reduzierung des Gehalts an Mikroorganismen, Bakterien und Sporen erfolgt in dem Verfahren gemäss der Erfindung in einem Mass, welches das Erreichen der geschilderten Vorteile erlaubt. Dem Fachmann ist es hierbei mit einfachen Routineexperimenten möglich, den Grad der ausreichenden Reduzierung jeweils in Abhängigkeit des vorgesehenen Verwendungszwecks des Molkeretentats zu ermitteln. Vorzugsweise werden Mikroorganismen, Bakterien und Sporen im wesentlichen vollständig abgetrennt, soweit dies technisch möglich, zur Überwindung der geschilderten Nachteile notwendig und wirtschaftlich sinnvoll ist.

Durch die Gewinnung eines Retentats durch Aufkonzentrierung der entrahmten, einen reduzierten Gehalt an Bakterien und Sporen aufweisenden Molke können die ernährungsphysiologisch wertvollen Bestandteile schonend aufkonzentriert werden und so in einer Form bereitgestellt werden, die insbesondere bei der Zugabe zu Milchprodukten höherer Festigkeit wie z.B. Halbhart- und Hartkäsen zu keiner Erniedrigung der Festigkeit führt. Den Grad der erforderlichen Aufkonzentrierung kann der Fachmann durch Routineversuche ohne weiteres der jeweiligen Weiterverwendung des Molkeproteinretentats anpassen.

Durch die Denaturierung des Retentats werden einerseits hervorragende (Weiter)Verarbeitungseigenschaften wie Schaumstabilität etc. erhalten, zum anderen wird die Wasseraufnahmefähigkeit der Molkeproteinpräparation stark erhöht (Quellung). Insbesondere durch die erhöhte Wasseraufnahmefähigkeit werden hervorragende Vorraussetzungen für die Weiterverarbeitung als Zusatz zu Milchprodukten geschaffen, da das denaturierte, in seiner Wasseraufnahmefähigkeit stark verbesserte Molkeretentat wesentlich besser in die Struktur von Milchprodukten, insbesondere von Halbhart- und Hartkäsen, integriert. Daher werden insbesondere keine nachteiligen Einflüsse auf den Geschmack und die Konsistenz eines mit einem erfindungsgemässen Molkeretentat versehenen Milchprodukts beobachtet.

Die Homogenisierung des denaturierten Retentats erfolgt vorzugsweise unter der Einwirkung von Scherkräften und erhöhter Temperatur, in einer Weise, die die Beigabe eines solchermassen hergestellten Molkeretentats zu Milchprodukten, insbesondere Käse, vorzugsweise Halbhart- und Hartkäsen erlaubt, ohne dass ein nachteiliger Einfluss auf die Konsistenz und Stabilität eintritt. Die erfindungsgemässen Molkeretentate können in hohen Anteilen dem Herstellungsprozess von Milchprodukten, insbesondere in der Käseherstellung der Verarbeitungsmilch zugesetzt werden, typischerweise etwa 0.1 bis 0,5 Gew.% Molkeretentat.

In einer Ausführungsform der Erfindung werden vorzugsweise alle Schritte des geschilderten Verfahrens sowie die vorgängige Lagerung der Molke und die nachträgliche Lagerung des denaturierten Molkeretentats bei kontrollierter, erniedrigter Temperatur durchgeführt, insbesondere bei Temperaturen im Bereich von etwa 5°C bis etwa 15°C, vorzugsweise bei etwa 8°C bis etwa 12°C. Hierbei wird das denaturierte Molkeretentats vor der Weiterverabeitung, insbesondere der Beigabe zur Verarbeitungsmilch in der Käsefertigung, vorzugsweise während ein bis drei Tagen bei einer Temperatur von etwa 5°C gelagert.

Die Entrahumg der Molke erfolgt in einer bevorzugten Ausführungsform der Erfindung durch Zentrifugation, vorzugsweise bei ca. 40-60°C und einem Druck von ca. 3-5 bar, bspw. mit einer handelsüblichen, selbstreinigenden Tellerzentrifuge, typischerweise bei einem Durchsatz von ca. 5000 Liter Molke je Stunde.

Hierbei können Standardbedingungen gewählt werden, wie sie bspw. aus der Käsefertigung im Zusammenhang mit der Herstellung von Sirtenrahm aus Molke bekannt sind.

In einem bevorzugten Ausführungsbeispiel der Erfindung erfolgt die Reduzierung des Gehalts an Mikroorganismen, Bakterien und Sporen in der entrahmten Molke durch Filtration, insbesondere durch Membranfiltration, vorzugsweise durch Mikrofiltration, wobei die Porengrösse der eingesetzten Membran kleiner ist als 10µm, vorzugsweise im Bereich von 1.6 µm bis 0.1 µm. Die Porengrösse ist hierbei derart zu wählen, dass die gängigsten in der jeweiligen Molke enthaltenen Mikroorganismen, Bakterien und Sporen durch den Filter, insbesondere den Membranfilter zurückgehalten werden. Der Fachmann kann im Rahmen der Erfindung bspw. durch eine repräsentative Analyse anhand dieser Massgabe den jeweils notwendigen Porendurchmesser ermitteln, welcher einen bestmöglichen Kompromiss aus maximaler Durchflussrate und ausreichender Abtrennung der Mikroorganismen, Bakterien und Sporen ermöglicht.

In einer besonders bevorzugten Ausführungsform wird durch die Reduzierung des Gehalts an Mikroorganismen, Bakterien und Sporen in der entrahmten Molke der pH-Wert des Filtrats in einem Bereich von pH 5,5 bis pH 7,5 stabilisiert.

Die Stabilisierung des pH Wertes in diesem Bereich ist besonders günstig, da insbesondere eine Verschiebung des pH Wertes in den sauren Bereich, bspw. bis unterhalb von pH 5 - 4.5, ansonsten eine unerwünschte Ausfällung von Molkeproteinen bewirken könnte. Insbesondere bei einer zu hohen Konzentration an Milchsäurebakterien und/oder Buttersäurebakterien, aber auch in Folge einer unzureichenden Abtrennung, könnte ansonsten eine derartige Erniedrigung des pH-Werts eintreten, die im Rahmen der Erfindung zu vermeiden ist.

Gemäss einer weiteren, besonders bevorzugten Ausführungsform wird der bei der Reduzierung des Gehalts an Mikroorganismen, Bakterien und Sporen in der entrahmten Molke zurückbleibende Filterrückstand autoklaviert und anschliessend dem Filtrat wieder zugeführt. Die Autoklavierungsbedingungen sind hierbei derart zu wählen, dass im wesentlichen alle Mikroorganismen, Bakterien und Sporen abgetötet werden; übermässiges Autoklavieren ist jedoch zu vermeiden. So können sich auch nach einer Wiedervereinigung mit dem Filtrat keine nachteiligen pH-Verschiebungen durch Milchsäure- und/oder Buttersäurebakterien ergeben. Ernährungsphysiologisch ist es absolut wünschenswert, auch den Filterrückstand - in autoklavierter Form - weiterzuverarbeiten und wieder mit dem Filtrat zusammenzuführen, da auch in dieser Fraktion wertvolle Proteine enthalten sind. Zudem wird angenommen, dass gerade auch in dieser Fraktion, und insbesondere durch das autoklavieren dieser Fraktion, Proteine insbesondere in einer derartigen Tertiär- und Quartärstruktur bereitgestellt werden, die sich förderlich auf die Strukturbildung und die Konsistenz des Endprodukts, welchem das Molkeretentat beigefügt wird, auswirken.

In einem weiteren Ausführungsbeispiel erfolgt die Gewinnung des Retentats durch Aufkonzentrierung mittels Filtration, insbesondere durch Membranfiltration, vorzugsweise durch Ultrafiltration, wobei die Porengrösse der eingesetzten Membran kleiner ist als O.1µm, vorzugsweise im Bereich von 0.1µm bis 0.001µm. Die Porengrösse ist hierbei derart zu wählen, dass im wesentlichen alle ernährungsphysiologisch wertvollen Molkeproteine zurückgehalten werden. Der Fachmann kann im Rahmen der Erfindung bspw. anhand einer repräsentativen Analyse des bei der Filtration erhaltenten Filtrats anhand dieser Massgabe die jeweils notwendige Porengrösse ermitteln. Ultrafiltration ist im Rahmen der Erfindung bevorzugt, da neben Wasser auch organische Moleküle mit geringem Molekulargewicht und auch Ionen wie bspw. Natrium, Calcium, etc. nicht abgetrennt werden und daher auch nicht mit aufkonzentriert werden, was sich andernfalls nachteilig auf den Geschmack auswirken könnte. Falls für spezielle Anwendungsfälle jedoch eine zumindest partielle Anreicherung derartiger Ionen und Salze gewünscht sein sollte, so kann bspw. Nanofiltration anstelle von Ultrafiltration angewendet werden.

In einem speziell bevorzugten Ausführungsbeispiel erfolgt die Aufkonzentrierung der entrahmten, einen reduzierten Gehalt an Mikroorganismen, Bakterien und Sporen aufweisenden Molke auf einen Proteingehalt von mehr als 5 Gew.%, insbesondere von bis zu 10 Gew.%, vorzugsweise von bis zu 15 Gew.%, besonders bevorzugt von bis zu 15 Gew.%. Auch höhere Proteingehalte sind im Rahmen der Erfindung selbstverständlich möglich; hierdurch kann die Handhabbarkeit durch Volumenreduktion erleichtert werden. Die Obergrenze der Konzentration des Proteingehalts kann vom Fachmann mit Routineversuchen leicht ermittelt und eingestellt werden.

Überraschenderweise wurde gefunden, dass ein erfindungsgemässes Molkeretentat auch bei Proteingehalten von 15 Gew.% und auch darüber - vom Fachmann im Einzelfall zu überprüfen je nach eingesetzter Molke - keine Gelierung der Proteine zeigt.

In einer besonders bevorzugten Ausführungsform der Erfindung erfolgt die Denaturierung des Retentats thermisch,'vorzugsweise durch Berieselung mit insbesondere etwa 80°C bis etwa 95°C heissem Wasser, insbesondere mit ca. 90°C heissem Wasser. Die Berieselung mit heissem Wasser, insbesondere mit feinstverteiltem heissem Wasser, bewirkt eine besonders schonende Erwärmung des Retentats, wodurch sich keine negativen Einflüsse auf Geschmack oder Konsistenz zeigen. Die Berieselung mit dem heissen Wasser erfolgt vorzugsweise unter insbesondere ständigem, mässigem Rühren des Retentats, so dass eine gute Durchmischung und gleichmässige Erwärmung bewirkt ist.

Besonders bevorzugt werden die Denaturierungsbedingungen im Rahmen der Erfindung derart gewählt, dass ein Aufquellen des Retentats bewirkt wird, wahrscheinlich durch Bindung der Molkeproteine and die Oberfläche von Kaseinmizellen über hydrophobe Wechselwirkungen und Kalziumbrücken und evtl. weitere Umlagerung mit α-Lactoglobulin und β-Lactalbumin. Derart denaturierte und aufgequollene Molkeretentate haben sich als besonders vorteilhaft hinsichtlich ihrer strukturellen Eigenschaften bei der Weiterverwendung in Milchprodukten als auch ihren sensorischen Eigenschaften wie Geschmack und Konsistenz erwiesen. Eine für den jeweiligen Anwendungsfall einmal als optimal vom Fachmann bestimmte Mizellengrösse (als Indiz für den Quellungsgrad) kann in der Folge leicht anhand von Routinemessungen bspw. mittels Mikroskopie etc. überwacht und prozesstechnisch eingehalten werden.

Vorzugsweise erfolgt die Denaturierung bei einer Temperatur von etwa 70°C bis etwa 85°C, besonders bevorzugt von etwa 70°C, vorzugsweise während einer Dauer von etwa 15 min bis etwa 60 min.

Die angegebenen Zeit- und Temperaturbereiche können ebenfalls für den jeweiligen Anwendungsfall, das vorgesehene Endprodukt bzw. die jeweils eingesetzte Molke als Startmaterial variiert und vom Fachmann in Kenntnis der Erfindung leicht ermittelt werden.

Weiter vorzugsweise erfolgt die Homogenisierung des denaturierten Retentats unter derartigen Bedingungen, dass bspw. eine mittlere Partikelgrösse von etwa < 0.5 µm bei der Weiterverarbeitung in der Emmentaler-Herstellung bewirkt wird. Der notwendige Grad der Homogenisierung ist hierbei in erster Linie abhängig von der jeweils vorgesehenen Weiterverwendung des Molkeretentats. Hierbei ist darauf zu achten und ggf. experimentell zu überprüfen, dass sich kein mehliger Geschmack und keine nachteiligen Einflüsse auf die Konsistenz des Produkts ergeben.

Besonders bevorzugt erfolgt die Homogenisierung bei Drücken von etwa 150 bar bis etwa 250 bar, vorzugsweise von etwa 200 bar, und Temperaturen im Bereich von etwa 50°C bis etwa 85°C, vorzugsweise von etwa 70°C.

Die Erfindung betrifft weiter ein denaturiertes Molkeretentat, herstellbar mit einem der vorstehend beschriebenen Verfahren, sowie ein Verfahren zur Herstellung eines Milchprodukts, wobei dem Herstellungsprozess des Milchprodukts ein solches denaturiertes Molkeretentat zugeführt wird.

Die Erfindung betrifft darüber hinaus ein Milchprodukt, insbesondere einen Halbhart- oder Hartkäse, vorzugsweise Halbhartkäse, herstellbar mit einem der vorstehend beschriebenen Verfahren und/oder unter Verwendung eines vorstehend beschriebenen denaturierten Molkeretentats.

Ferner betrifft die Erfindung eine Vorrichtung zur Herstellung eines denaturierten Molkeretentats, mit einer Mikrofiltrationsanordnung, einer Ultrafiltrationsanordnung, einer Denaturierungsanordnung sowie einer Homogenisierungsanordnung.

Vorzugsweise umfasst die Vorrichtung weiter eine Autoklavieranordnung zum Autoklavieren des Filterrückstands der Mikrofiltration.

In einer besonders bevorzugten Ausführungsform umfasst die Vorrichtung weiter eine Umkehrosmose- oder Nanofiltrationsanordnung zur Nachbehandlung des bei der Gewinnung eines Retentats durch Aufkonzentrierung der entrahmten, einen reduzierten Gehalt an Bakterien und Sporen aufweisenden Molke anfallenden Filtrats. Durch eine derartige Nachbehandlung des Filtrats (des sog. Permeats) kann eine gereinigte Zuckerlösung gewonnen werden, die bspw. als Nährstoff für Hefen oder in der Schweinefütterung eingesetzt werden kann. Hierdurch kann eine besonders effiziente und vollständige Verwertung der eingesetzten Molke erzielt werden.

In einer weiteren, besonders bevorzugten Ausführungsform umfasst die Denaturierungsanordnung einen Denaturierungstank, welcher mit einer Vorrichtung zur Berieselung des Tankinhalts mit insbesondere heissem Wasser ausgerüstet ist. Eine Berieselung des zu denaturierenden Molkeretentats mit heissem Wasser hat sich insbesondere im Rahmen der Erfindung als besonders vorteilhaft aufgrund der schonenden Erwärmung erwiesen (derzeit bevorzugt ist eine Aufheizphase von ca. 3-45 Minuten auf etwa 65-85°C, wobei diese Parameter ebenso wie die erforderliche Wassermenge zur Berieselung vom Fachmann in Routineversuchen optimiert werden können). Hierdurch bilden sich offensichtlich keine bzw. kaum bitterschmeckende Sekundärprodukte. Bei der Vorrichtung zur Berieselung kann es sich bspw. um einen Sprühkopf handeln. Die Vorrichtung zur Berieselung ist vorzugsweise derart ausgebildet, dass die gesamte Oberfläche des zu behandelnden Mediums von dem Berieselungsbereich erfasst wird. Ggf. kann auch eine rotierbare bzw. schwenkbare Berieselungsvorrichtung vorgesehen werden.

Die Erfindung wird nachfolgend anhand eines Ausführungsbeispiels näher erläutert, ohne dass der Gegenstand der Erfindung auf das gezeigte Ausführungsbeispiel zu beschränken ist. Es zeigen:
- Figur 1:: Flussschema eines Verfahrens gemäss der Erfindung, schematisch und exemplarisch;
- Figur 2:: Abschnitte der Vorrichtung zur Durchführung des Verfahrens;
- Figur 3:: Denaturierungstank, schematisch und exemplarisch.

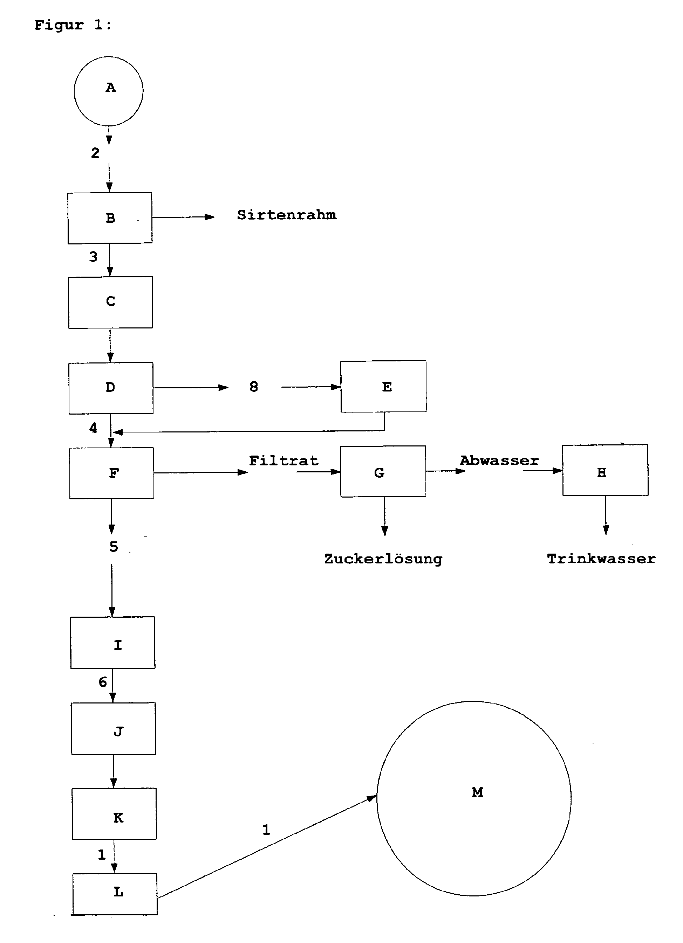

Figur 1 illustriert schematisch und exemplarisch einen erfindungsgemässen Verfahrensablauf, wie er bspw. zur Herstellung von denaturiertem Molkeretentat zur Beimengung in die Verarbeitungsmilch zur Käseherstellung angewendet werden kann. Im einzelnen ist gezeigt:
Während der Käsefabrikation (Schritt A) fällt Molke 2 an. Von dieser Molke 2 wird der Sirtenrahm abgetrennt (Schritt B) und entrahmte Molke 3 erhalten. Die entrahmte Molke 3 kann im Einzelfall, falls erwünscht, anschliessend gekühlt werden, insbesondere auf etwa 8°C (Schritt C). Die entrahmte Molke 3 wird anschliessend einer Mikrofilration unterzogen (Schritt D), wodurch Mikroorganismen, Bakterien und Sporen weitgehend abgetrennt werden und eine entrahmte, einen verringerten Gehalt an Mikroorganismen, Bakterien und Sporen aufweisende Molke 4 erhalten wird.

Der Filterrückstand 8, welcher die Mikroorganismen, Bakterien und Sporen beinhaltet, wird anschliessend autoklaviert, um diese abzutöten (Schritt E). Nach dem Autoklavieren kann der Filterrückstand insbesondere wieder dem Filtrat 4 aus Schritt D zugeführt werden. Die entrahmte, einen verringerten Gehalt an Mikroorganismen, Bakterien und Sporen aufweisende Molke 4 wird anschliessend einer Ultrafiltration zur Aufkonzentrierung unterzogen (Schritt F), wobei ein Retentat 5 erhalten wird, welches im erfindungsgemässen Verfahren weiterverarbeitet wird. Das Retentat 5 wird anschliessend thermisch und unter Schärbedingungen schonend denaturiert, vorzugsweise bei einer Temperatur von etwa 70°C bis etwa 85°C erfolgt, besonders bevorzugt von etwa 70°C, vorzugsweise während einer Dauer von etwa 15 min bis etwa 60 min (Schritt I). Mittels Pumpen oder Schnecken kann das erhaltene, denaturierte Retentat 6 anschliessend weitergefördert werden (Schritt J). Anschliessend wird das denaturierte Retentat 6 derart homogenisiert, dass sich für den jeweiligen weiteren Verwendungszweck des Molkeretentats keine nachteiligen Auswirkungen auf Geschmack oder Konsistenz des Endprodukts ergeben (Schritt K); in der Regel werden hierfür Bedingungen von etwa 150 bar bis etwa 250 bar, vorzugsweise von etwa 200 bar, und Temperaturen im Bereich von etwa 50°C bis etwa 85°C, vorzugsweise von etwa 70°C gewählt. Das solchermassen erhaltene denaturierte und homogenisierte Molkeretentat 1 kann anschliessend gelagert werden (Schritt L), bspw. während 1-3 Tagen bei < 8°C und bspw. in der Käsefertigung (Schritt M) der Verarbeitungsmilch beigefügt werden.

Das in Schritt F anfallende Filtrat bei der Aufkonzentrierung mittels Ultrafiltration kann einer Nanofiltration bzw. einer Umkehrosmose unterzogen werden (Schritt G), wobei eine gereinigte Zuckerlösung erhalten wird, die bspw. als Nährstoff für Hefen oder als Tierfutter, insbesondere in der Schweinefütterung verwendet werden kann. Das in Schritt G erhaltene Abwasser wird nachfolgend einer Filtration bspw. in einem Fixbettfilter unterzogen (Schritt H) und so zu Trinkwasser aufbereitet.

Ein mit einem erfindungsgemässen Molkeretentat versehenes Käseprodukt (hier: Emmentaler Switzerland) kann bspw. aus folgender Mischung in ansonsten üblicher Weise hergestellt werden, wobei der Wasserzusatz erhöht ist:

### Beispiel 1:

| | |
|---|---|
| Verarbeitungsmilch: | 4.500 kg |
| Denat. Molkeretentat: | 15 kg (reines Proteingewicht) |
| Kessimilchfettgehalt: | 2,8 % |
| Wasserzusatz in Milch: | 550 kg |
| Wasserzusatz in Käsebruch: | 880 kg |

Ein derart mit denaturiertem Molkeretentat 1 versehenes Milchprodukt 9 zeigte keinerlei nachteiligen Eigenschaften hinsichtlich seiner sensorischen Eigenschaften wie Geschmack, und auch die Konsistenz war nicht beeinflusst. Insbesondere wies das Produkt weder den aus dem Stand der Technik bekannten bitteren Geschmack noch eine mit anderen Verfahren gelegentlich berichtete, mehlige Konsistenz bzw. einen mehligen Geschmack auf. Auch höhere Beigaben von denaturiertem Molkeretentat 1 gemäss der Erfindung sind möglich, bspw. in der Regel bis zu 5 Gew.% (reines Proteingewicht); höhere Beigaben sind im Einzelfall vom Fachmann in Routineversuchen insbesondere auf ihre Auswirkungen auf die sensorischen Eigenschaften und auch die Konsistenz zu überprüfen.

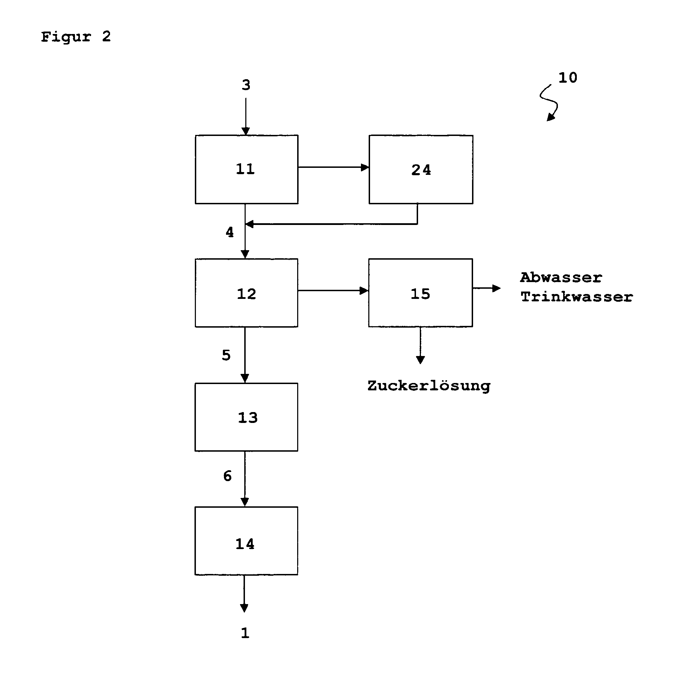

Figur 2 zeigt schematisch und exemplarisch die einzelnen Abschnitte der Vorrichtung 10 zur Durchführung des erfindungsgemässen Verfahrens mit den Verfahrensschritten gemäss Figur 1. Einer Mikrofiltrationsanordnung 11 wird entrahmte Molke 3 zugeführt und einer Mikrofiltration unterzogen. Der Filterrückstand wird in einer Autoklavieranordnung 24 autoklaviert und anschliessend mit dem Filtrat der Mikrofiltration wiedervereinigt. Selbstverständlich ist es im Rahmen der Erfindung stets möglich, auch nur Teilmengen des autoklavierten Filterrückstands wieder mit dem Filtrat zu vereinigen, falls sich dies in Versuchen insbesondere aus sensorischen Gründen als vorteilhaft erweist. Die so erhaltene, entrahmte, einen verringerten Gehalt an Mikroorganismen, Bakterien und Sporen aufweisende Molke 4 wird anschliessend in einer Ultrafiltrationsanordnung 12 einer Ultrafiltration zur Aufkonzentrierung unterzogen. Das Filtrat wird in einer Nanofiltrationsanordnung bzw. einer Umkehrosmoseanordnung 15 nachbehandelt und zu einer gereinigten Zuckerlösung und zu Abwasser bzw. nach einer weiteren Filtration zu Trinkwasser weiterverarbeitet. Der Filterrückstand der Ultrafiltration in der Ultrafiltrationsanordnung 12, das sog. Retentat 5, wird anschliessend in einer Denaturierungsanordnung 13 geeigneten Denaturierungsbedingungen unterworfen und so denaturiertes Molkeretentat 6 erhalten. Dieses denaturierte Molkeretentat wird anschliessend in einer Homogenisierungsanordnung 14 derart homogenisiert, dass keine nachteiligen sensorischen Auswirkungen und keine nachteiligen strukturellen Auswirkungen auf das vorgesehene Produkt, dem das denaturierte und homogenisierte Molkeretentat 6 beigegeben werden soll, auftreten.

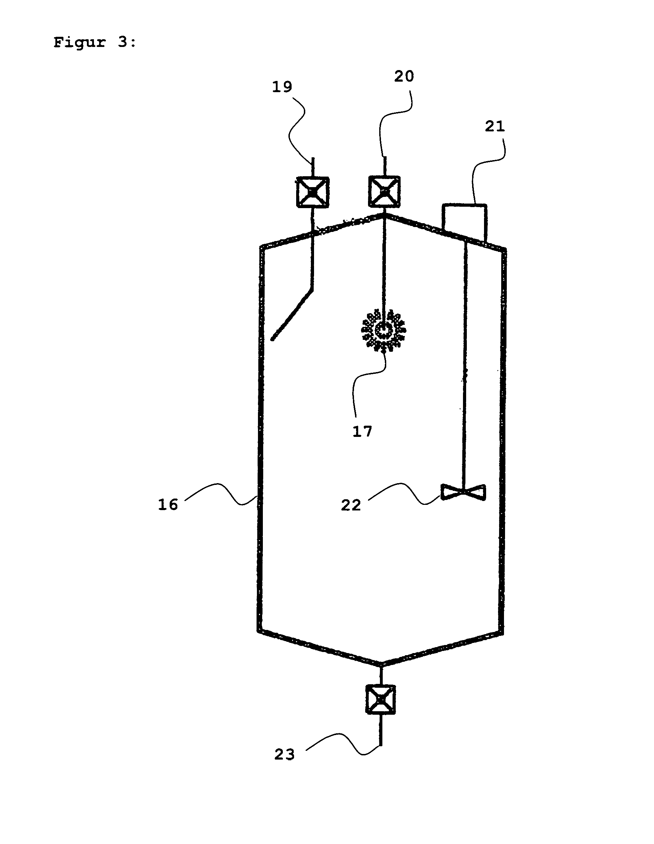

Figur 3 zeigt schematisch und exemplarisch einen Denaturierungstank 16, wie er als Bestandteil der Denaturierungsanordnung 13 besonders vorteilhaft verwendet werden kann. Der Denaturierungtank 16 weist einen Einlass 19 für das zu denaturierende Medium auf. Vorzugsweise wird das Medium an der Tankwand herabgeleitet, um übermässige Turbulenzen und dadurch evtl. hervorgerufene Schäumung zu vermeiden. Der Denaturierungstank 16 weist weiter einen Rührer 22 zur Durchmischung des Mediums und zur Ausübung von Scherkräften auf, welcher mit einem vorzugsweise aussenliegenden Rührmotor 21 verbunden ist. Im unteren Bereich des Denaturierungstanks 16 befindet sich ein Auslass 23 für das denaturierte Retentat 5. Der Denaturierungstank 16 weist weiter einen Einlass 20 für heisses Wasser auf, welcher im Innern des Denaturierungstanks 16 mit einer Vorrichtung 17 zur Berieselung des Tankinhalts mit heissem Wasser verbunden ist. Vorzugsweise handelt es sich bei der Vorrichtung 17 zur Berieselung um eine Kugelkopf-Berieselungseinrichtung. Die Berieselung mit heissem Wasser, insbesondere unter Durchmischung des zu behandelnden Mediums hat sich als besonders schonende Methode der Denaturierung erwiesen, welche keinerlei nachteilige Einflüsse auf die sensorischen Eigenschaften und die Konsistenz des Molkeretentats zeigt.

## Patentansprüche

1. Verfahren zur Herstellung eines denaturierten Molkeretentats (1), umfassend die folgenden Schritte:
- Entrahmung der Molke (2);
- Reduzierung des Gehalts an Bakterien und Sporen in der entrahmten Molke (3);
- Gewinnung eines Retentats (5) durch Aufkonzentrierung der entrahmten, einen reduzierten Gehalt an Bakterien und Sporen aufweisenden Molke (4);
- Denaturierung des Retentats (5);
- Homogenisierung des denaturierten Retentats (6).

2. Verfahren gemäss Anspruch 1,
**dadurch gekennzeichnet, dass** die Entrahmung der Molke (2) durch Zentrifugation erfolgt, vorzugsweise bei 40-50°C, insbesondere bei einem Druck von 3-5 bar.

3. Verfahren gemäss einem der Ansprüche 1 oder 2,
**dadurch gekennzeichnet, dass** die Reduzierung des Gehalts an Bakterien und Sporen in der entrahmten Molke (3) durch Filtration, insbesondere durch Membranfiltration, vorzugsweise durch Mikrofiltration erfolgt, wobei die Porengrösse der eingesetzten Membran kleiner ist als 10µm, vorzugsweise im Bereich von 10µm bis 1.6µm.

4. Verfahren gemäss einem der Ansprüche 1 bis 3,
**dadurch gekennzeichnet, dass** durch die Reduzierung des Gehalts an Bakterien und Sporen in der entrahmten Molke (3) der pH-Wert des Filtrats (7) in einem Bereich von pH 5.5 bis pH 6.5 stabilisiert wird.

5. Verfahren gemäss einem der Ansprüche 3 oder 4,
**dadurch gekennzeichnet, dass** der bei der Reduzierung des Gehalts an Bakterien und Sporen in der entrahmten Molke (3) zurückbleibende Filterrückstand (8) autoklaviert und anschliessend dem Filtrat (7) wieder zugeführt wird.

6. Verfahren gemäss einem der Ansprüche 1 bis 5,
**dadurch gekennzeichnet, dass** die Gewinnung des Retentats (5) durch Aufkonzentrierung mittels Filtration, insbesondere durch Membranfiltration, vorzugsweise durch Ultrafiltration erfolgt, wobei die Porengrösse der eingesetzten Membran kleiner ist als 0.01µm, vorzugsweise im Bereich von 0.01µm bis 5nm.

7. Verfahren gemäss Anspruch 6,
**dadurch gekennzeichnet, dass** die Aufkonzentrierung der entrahmten, einen reduzierten Gehalt an Bakterien und Sporen aufweisenden Molke (4) auf einen Proteingehalt von mehr als 5 Gew.-%, insbesondere von bis zu 10 Gew.-%, vorzugsweise von bis zu 16 Gew.-% erfolgt.

8. Verfahren gemäss einem der Ansprüche 1 bis 7,
**dadurch gekennzeichnet, dass** die Denaturierung des Retentats (5) thermisch erfolgt.

9. Verfahren gemäss Anspruch 8,
**dadurch gekennzeichnet, dass** die Erwärmung des Retentats (5) durch Berieselung mit vorzugsweise etwa 80°C bis etwa 95°C heissem Wasser, insbesondere mit ca. 90°C heissem Wasser erfolgt.

10. Verfahren gemäss einem der Ansprüche 8 oder 9,
**dadurch gekennzeichnet, dass** die Denaturierungsbedingungen derart gewählt sind, dass ein Aufquellen des Retentats (5) bewirkt wird.

11. Verfahren gemäss einem der Ansprüche 8 bis 10,
**dadurch gekennzeichnet, dass** die Denaturierung bei einer Temperatur von etwa 70°C bis etwa 85°C erfolgt, besonders bevorzugt von etwa 70°C, vorzugsweise während einer Dauer von etwa 15 min bis etwa 60 min.

12. Verfahren gemäss einem der Ansprüche 1 bis 11,
**dadurch gekennzeichnet, dass** die Homogenisierung des denaturierten Retentats (6) unter Bedingungen erfolgt, dass eine mittlere Partikelgrösse von etwa 0.5 µm bewirkt wird.

13. Verfahren gemäss Anspruch 12,
**dadurch gekennzeichnet, dass** die Homogenisierung bei Drücken von etwa 150 bar bis etwa 250 bar, vorzugsweise von etwa 200 bar, und Temperaturen im Bereich von etwa 50°C bis etwa 85°C, vorzugsweise von etwa 70°C erfolgt.

14. Denaturiertes Molkeretentat (1), herstellbar mit einem Verfahren gemäss einem der Ansprüche 1 bis 13.

15. Verfahren zur Herstellung eines Milchprodukts (9),
**dadurch gekennzeichnet, dass** ein Molkeretentat (1) gemäss Anspruch 14 dem Herstellungsprozess des Milchprodukts (9) zugeführt wird.

16. Milchprodukt (9), insbesondere Halbhart- oder Hartkäse, vorzugsweise Halbhartkäse, herstellbar mit einem Verfahren gemäss Anspruch 15 und/oder unter Verwendung eines denaturierten Molkeretentats (1) gemäss Anspruch 14.

17. Vorrichtung (10) zur Herstellung eines denaturierten Molkeretentats (1), insbesondere gemäss einem der Ansprüche 1 bis 13, mit einer Mikrofiltrationsanordnung (11), einer Ultrafiltrationsanordnung (12), einer Denaturierungsanordnung (13) sowie einer Homogenisierungsanordnung (14).

18. Vorrichtung (10) gemäss Anspruch 17, weiter umfassend eine Autoklavieranordnung (24).

19. Vorrichtung gemäss einem der Ansprüche 17 oder 18, weiter umfassend eine Umkehrosmose- oder Nanofiltrationsanordnung (15) zur Nachbehandlung des bei der Gewinnung eines Retentats (5) durch Aufkonzentrierung der entrahmten, einen reduzierten Gehalt an Bakterien und Sporen aufweisenden Molke (4) anfallenden Filtrats (7).

20. Vorrichtung gemäss einem der Ansprüche 17 bis 19,
**dadurch gekennzeichnet, dass** die Denaturierungsanordnung (13) einen Denaturierungstank (16) umfasst, welcher mit einer Vorrichtung (17) zur Berieselung des Tankinhalts mit insbesondere heissem Wasser ausgerüstet ist.
